# EUROPÄISCHE PATENTSCHRIFT

(11) **EP 3 515 756 B1**
(45) Veröffentlichungstag und Bekanntmachung des Hinweises auf die Patenterteilung: **24.02.2021**
(21) Anmeldenummer: 17783402.5
(22) Anmeldetag: 21.09.2017
(51) Int. Cl.: B60N 2/07

(54) **SITZSCHIENENPAAR FÜR EINEN FAHRZEUGSITZ**
SLIDE FOR A VEHICLE SEAT
GLISSIÈRE POUR UN SIÈGE DE VÉHICULE

(30) Priorität: 21.09.2016 DE 102016218132; 21.12.2016 DE 102016225822
(43) Veröffentlichungstag der Anmeldung: 31.07.2019
(73) Patentinhaber: Adient Luxembourg Holding S.à r.l., 1855 Luxembourg (LU)
(72) Erfinder: QUAST, Ingo, 40477 Düsseldorf (DE); SPRENGER, Erik, 42929 Wermelskirchen (DE); GOETTEL, Udo, 67752 Wolfstein (DE); TURAN, Turgay, 50171 Kerpen (DE); ZACHARIAS, Michael, 42799 Leichlingen (DE); FLICK, Joachim, 42499 Hueckeswagen (DE)
(74) Vertreter: Liedhegener, Ralf
(86) Internationale Anmeldenummer: PCT/EP2017/073946
(87) Internationale Veröffentlichungsnummer: WO 2018/055055

(56) Entgegenhaltungen:
- EP-A1- 0 856 429
- DE-A1- 10 039 510
- DE-A1- 10 039 511
- DE-A1-102014 213 104
- DE-A1-102014 217 331
- DE-A1-102014 219 865
- DE-B3-102011 115 948
- FR-A1- 2 847 530

## Beschreibung

Die Erfindung betrifft ein Sitzschienenpaar für einen Fahrzeugsitz, insbesondere für einen Kraftfahrzeugsitz, mit einer Unterschiene, einer relativ zur Unterschiene in Längsrichtung verschiebbar geführten Oberschiene, welche sich mit ihren Profilen gegenseitig hintergreifen, wobei die Unterschiene ein im Wesentlichen C-förmiges Profil mit an den Enden nach unten gebogenen Abschnitten aufweist, und die Oberschiene ein im Wesentlichen U-förmiges Profil mit nach oben gebogenen Endabschnitten aufweist, wobei Wälzkörper in zwei unteren Wälzkörperlaufbahnen und zwei oberen Wälzkörperlaufbahnen zwischen der Unterschiene und der Oberschiene angeordnet sind, wobei ein die in den unteren Wälzkörperlaufbahnen angeordneten Wälzkörper kontaktierender Teil der Endabschnitte der Oberschiene eine ebene Auflagefläche aufweist.

### Stand der Technik

Aus der JP 2005-67218 A ist ein gattungsgemäßer Fahrzeugsitz mit einem Längsverschiebemechanismus bekannt, welcher eine Oberschiene und eine Unterschiene umfasst. Zur Begrenzung des Verschiebeweges der Oberschiene relativ zur Unterschiene sind Endanschläge vorgesehen.

Aus der DE 10 2014 219 865 A1 ist ein Schienenpaar für einen Fahrzeugsitz bekannt, umfassend mindestens eine untere Sitzschiene und eine obere Sitzschiene, die einander unter Bildung eines Schienenprofils wechselseitig umgreifen und relativ zueinander in Längsrichtung beweglich sind und miteinander mittels einer Schienenverriegelung verriegelbar sind, und Wälzelemente, welche zwischen den Sitzschienen in einem Zusammenwirkungsbereich angeordnet sind, wobei die obere Sitzschiene zwei Seitenwände umfasst, die in Vertikalausrichtung vom Bodenbereich weitgehend parallel und senkrecht abragen und im weiteren Verlauf in Vertikalausrichtung nach außen oder innen derart gebogen sind, dass diese horizontal verlaufen und jeweils eine horizontale Auflagefläche für die Wälzelemente mindestens einer Wälzlaufbahn bilden.

Aus der DE 10 2014 213 104 A1 ist ein Längseinsteller für einen Fahrzeugsitz bekannt, umfassend eine Unterschiene und eine darin in Längsrichtung verschiebbar geführte Oberschiene, sowie mindestens ein zwischen der Oberschiene und der Unterschiene angeordnetes Lagerelement zur Lagerung der Oberschiene an der Unterschiene, wobei das Lagerelement mindestens eine Verzahnung aufweist.

Aus der DE 100 39 510 A1 sowie der DE 100 39 511 A1 sind jeweils ein Sitzschienenpaar für einen Fahrzeugsitz, insbesondere für einen Kraftfahrzeugsitz, bekannt, mit einer Unterschiene, einer relativ zur Unterschiene in Schienenlängsrichtung verschiebbar geführten Oberschiene, welche sich mit ihren Profilen gegenseitig hintergreifen, und Kugeln, welche zwischen der Unterschiene und der Oberschiene in einem Zusammenwirkungsbereich angeordnet sind.

Aus der DE 10 2014 217 331 A1 ist eine Schienenanordnung für einen Sitz, insbesondere einen Fahrzeugsitz, bekannt, umfassend eine Unterschiene und eine in dieser längsverschiebbar geführte Oberschiene, welche sich mit ihren Profilen gegenseitig hintergreifen, wobei mindestens ein flexibles Verriegelungselement vorgesehen ist, welches derart drehbar innerhalb der Schienenanordnung angeordnet ist, dass es im gespannten Zustand die Ober- und die Unterschiene voneinander entriegelt und im entspannten Zustand die Ober- und die Unterschiene gleichzeitig mehrfach verriegelt.

Aus der EP 0 856 429 A1 ist ein Sitzschienenpaar bekannt, bei dem vier Kugeln zwischen einer Unterschiene und einer Oberschiene vorgesehen sind. Je zwei Kugeln liegen auf beiden Seiten eines schräg geneigten Endabschnitts der Unterschiene an, welcher als Kugellaufbahn in seiner Form den Kugeln angepasst ist. Die Oberschiene umschließt die Kugeln auf der jeweils anderen Seite mit Abschnitten unterschiedlicher Neigung als Kugellaufbahnen. Die Verriegelung der beiden Sitzschienen erfolgt durch einen außermittig eingeführten Riegel.

Aus der FR 2 847 530 A1 ist eine Sitzschiene bekannt, welche einen ersten und einen zweiten Bereich aufweist. Der erste Bereich umfasst einen Anschlag für den zweiten Bereich, um eine Relativbewegung der beiden Bereiche zueinander zu begrenzen. Ein zweiter Anschlag für den zweiten Bereich ist abnehmbar am ersten Bereich angeordnet, um eine Relativbewegung der beiden Bereiche zueinander zu begrenzen.

### Aufgabe

Der Erfindung liegt die Aufgabe zu Grunde, ein Sitzschienenpaar der eingangs genannten Art zu verbessern, insbesondere ein Sitzschienenpaar mit einer definierten Positionierung eines Wälzkörperkäfigs sowie einer höheren Belastbarkeit im Crashfall bereitzustellen.

### Lösung

Diese Aufgabe wird erfindungsgemäß gelöst durch ein Sitzschienenpaar für einen Fahrzeugsitz, insbesondere für einen Kraftfahrzeugsitz, mit einer Unterschiene, einer relativ zur Unterschiene in Längsrichtung verschiebbar geführten Oberschiene, welche sich mit ihren Profilen gegenseitig hintergreifen, wobei die Unterschiene ein, insbesondere nach oben geöffnetes, im Wesentlichen C-förmiges Profil mit an den Enden nach unten gebogenen Abschnitten aufweist, wobei die Oberschiene ein, insbesondere nach unten geöffnetes, im Wesentlichen U-förmiges Profil mit nach oben gebogenen Endabschnitten aufweist, wobei Wälzkörper in zwei unteren und zwei oberen Wälzkörperlaufbahnen zwischen der Unterschiene und der Oberschiene angeordnet sind, wobei ein die in den unteren Wälzkörperlaufbahnen angeordneten Wälzkörper kontaktierender Teil der Endabschnitte der Oberschiene eine ebene Auflagefläche aufweist, wobei die Auflagefläche tangential zu einer gedachten Kreisbahn um einen Mittelpunkt einer äußeren Biegung des U-förmigen Profils der Oberschiene orientiert ist.

Dadurch, dass ein die in den unteren Wälzkörperlaufbahnen angeordneten Wälzkörper kontaktierender Teil der Endabschnitte der Oberschiene eine ebene Auflagefläche aufweist und die Auflagefläche tangential zu einer gedachten Kreisbahn um einen Mittelpunkt einer äußeren Biegung des U-förmigen Profils der Oberschiene orientiert ist, kann eine hohe Festigkeit und eine Toleranzkompensation des Sitzschienenpaares erreicht werden. Insbesondere kann die Stabilität des Sitzschienenpaares in Querrichtung und Vertikalrichtung, sowie eine Torsionssteifigkeit erhöht werden.

Vorteilhafte Ausgestaltungen, welche einzeln oder in Kombination miteinander eingesetzt werden können, sind Gegenstand der Unteransprüche.

Die Unterschiene kann eine im Wesentlichen ebene Basis aufweisen, an welcher in Querrichtung betrachtet beiderseits nach oben gebogene, äußere Profilabschnitte angrenzen. Die nach oben gebogenen Profilabschnitte können an ihren der Basis gegenüberliegenden Enden in die nach unten gebogenen Abschnitte übergehen. Die nach oben gebogenen Endabschnitte der Oberschiene können in den äußeren Profilabschnitten der Unterschiene geführt sein.

Die Wälzkörperlaufbahnen können in den äußeren Profilabschnitten angeordnet sein. Die äußeren Profilabschnitte können im Bereich der unteren Wälzkörperlaufbahnen relativ zur Basis der Unterschiene unter Bildung einer Stufe in Vertikalrichtung erhöht angeordnet sein.

Die jeweilige Auflagefläche kann den jeweiligen Wälzkörper in einer einer Symmetrieachse des Sitzschienenpaars näheren Hälfte kontaktieren und nach außen hin verlängert ausgestaltet sein. Die Auflagefläche kann in einem Winkel im Bereich von 15° bis 25°, insbesondere in einem Winkel von 20°, zur Basis angestellt sein.

Die Verschiebbarkeit der Oberschiene relativ zur Unterschiene kann mittels eines Zusammenwirkens eines in Verlängerung der nach unten gebogenen Abschnitte der Unterschiene angeordneten Endanschlags mit einem in einem Übergangsbereich zwischen dem U-förmigen Profil und dem jeweiligen nach oben gebogenen Endabschnitt angeordneten Anschlagelement begrenzt sein.

Die Wälzkörper können in einem oberen oder einem unteren Halteabschnitt eines gemeinsamen Wälzkörperkäfigs gehalten sein.

### Figuren und Ausführungsformen der Erfindung

Bevor nachfolgend eine Ausgestaltung der Erfindung eingehender an Hand von Zeichnungen beschrieben wird, ist zunächst festzuhalten, dass die Erfindung nicht auf die beschriebenen Komponenten oder die beschriebenen Verfahrensschritte beschränkt ist. Weiterhin stellt auch die verwendete Terminologie keine Einschränkung dar, sondern hat lediglich beispielhaften Charakter. Soweit nachfolgend in der Beschreibung und den Ansprüchen der Singular verwendet wird ist dabei jeweils der Plural mitumfasst, soweit der Kontext dies nicht explizit ausschließt.

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Es zeigen:
- Fig. 1:: einen Querschnitt eines erfindungsgemäßen Sitzschienenpaars,
- Fig. 2:: eine weitere Ansicht des Querschnitts des Sitzschienenpaares aus Fig. 1,
- Fig. 3:: eine weitere Ansicht des Querschnitts des Sitzschienenpaares aus Fig. 1,
- Fig. 4:: eine weitere Ansicht des Querschnitts des Sitzschienenpaares aus Fig. 1, im Bereich einer Verriegelungsplatte,
- Fig. 5:: einen ausschnittsweisen Querschnitt des Sitzschienenpaars aus Fig. 1, und
- Fig. 6:: eine weitere Ansicht des Querschnitts des Sitzschienenpaares aus Fig. 1.

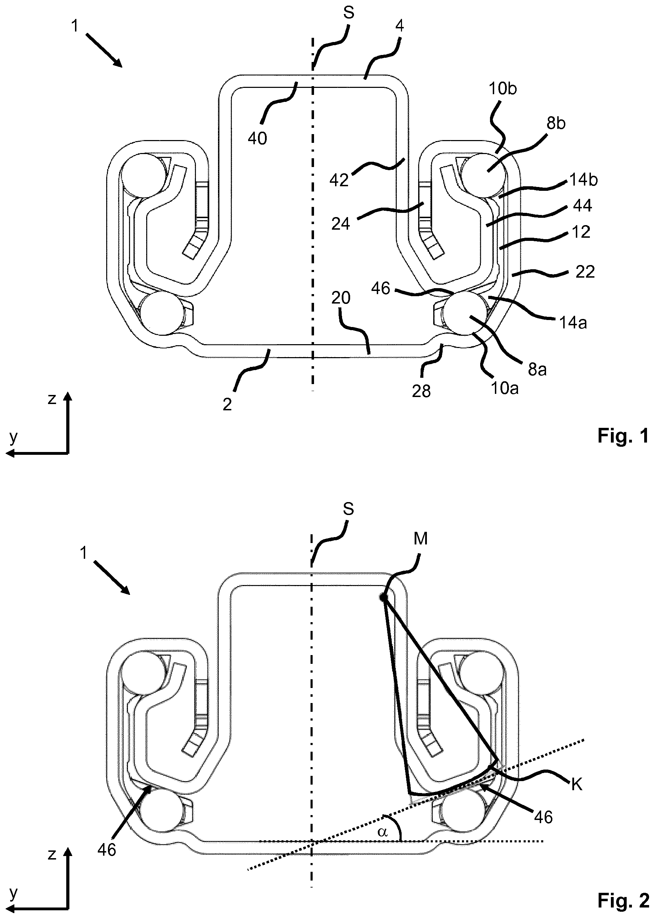

Ein in Figur 1 schematisch dargestelltes gattungsgemäßes Sitzschienenpaar 1 wird nachfolgend unter Verwendung von drei senkrecht zueinander verlaufenden Raumrichtungen beschrieben. Eine Längsrichtung verläuft bei einem im Fahrzeug eingebauten Sitzschienenpaar 1 weitgehend horizontal und vorzugsweise parallel zu einer Fahrzeuglängsrichtung, die der gewöhnlichen Fahrtrichtung des Fahrzeuges entspricht. Eine zu der Längsrichtung senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung und senkrecht zu der Querrichtung y. Bei einem im Fahrzeug eingebauten Sitzschienenpaar 1 verläuft die Vertikalrichtung z parallel zu der Fahrzeughochachse.

Die verwendeten Positions- und Richtungsangaben, wie beispielsweise vorne, hinten, oben und unten beziehen sich auf eine Blickrichtung eines in einem Fahrzeugsitz sitzenden Insassen in normaler Sitzposition, wobei der Fahrzeugsitz im Fahrzeug eingebaut, in einer zur Personenbeförderung geeigneten Gebrauchsposition mit aufrecht stehender Lehne und wie üblich in Fahrtrichtung ausgerichtet ist.

Fig. 1 zeigt einen Querschnitt eines erfindungsgemäßen Sitzschienenpaars 1 für einen Fahrzeugsitz, insbesondere für einen Kraftfahrzeugsitz. Die weiteren Figuren 2 bis 6 zeigen ebenfalls das Sitzschienenpaar 1 in einem vollständigen oder ausschnittsweisen Querschnitt. Die Beschreibung des Sitzschienenpaars 1 von Fig. 1 gilt für die nachfolgenden Figuren 2 bis 6 fort, sofern zu diesen keine explizit abweichende Beschreibung angegeben wird.

Das Sitzschienenpaar 1 weist eine Unterschiene 2 und eine relativ zur Unterschiene 2 in Längsrichtung verschiebbar geführte Oberschiene 4 auf. Die Unterschiene 2 und die Oberschiene 4 hintergreifen sich mit ihren Profilen gegenseitig. Die Unterschiene 2 weist ein nach oben geöffnetes, im Wesentlichen C-förmiges Profil mit an den Enden nach unten gebogenen Abschnitten 24 auf. Die Unterschiene 2 weist eine im Wesentliche ebene Basis 20 auf, an welcher parallel zur Querrichtung y betrachtet beiderseits nach oben gebogene, äußere Profilabschnitte 22 angrenzen. Die nach oben gebogenen Profilabschnitte 22 gehen an ihren der Basis 20 gegenüberliegenden Enden in die nach unten gebogenen Abschnitte 24 über.

Die Oberschiene 4 weist ein nach unten geöffnetes, im Wesentlichen U-förmiges Profil mit nach oben gebogenen Endabschnitten 44 auf. Die Oberschiene 4 weist ein im Wesentlichen ebenes Grundprofil 40 auf, an welchem, parallel zur Querrichtung y betrachtet, beiderseits nach unten gebogene Schenkel 42 angrenzen. Die nach unten gebogenen Schenkel 42 gehen an ihren dem Grundprofil 40 gegenüberliegenden Enden in die nach oben gebogenen Endabschnitten 44 über.

Die nach oben gebogenen Endabschnitte 44 der Oberschiene 4 sind in den äußeren Profilabschnitten 22 der Unterschiene 2 geführt. In zwei unteren Wälzkörperlaufbahnen 10a und zwei oberen Wälzkörperlaufbahnen 10b sind jeweils wenigstens zwei Wälzkörper 8a, 8b zwischen der Unterschiene 2 und der Oberschiene 4 angeordnet. Die Wälzkörperlaufbahnen 10a, 10b sind in den äußeren Profilabschnitten 22 angeordnet. Die Wälzkörper 8a, 8b sind in einem oberen Halteabschnitt 14b und einem unteren Halteabschnitt 14a eines gemeinsamen Wälzkörperkäfigs 12 gehalten. Jeder Wälzkörperkäfig 12 hält wenigstens vier Wälzkörper 8a, 8b.

Ein die in den unteren Wälzkörperlaufbahnen 10a angeordneten Wälzkörper 8a kontaktierender Teil der Endabschnitte 44 der Oberschiene 4 weist eine ebene Auflagefläche 46 auf.

Die Oberschiene 4, sowie die Unterschiene 2 sind vorliegend zu einer Symmetrieachse S symmetrisch ausgestaltet. Die Oberschiene 4 weist vorliegend zwölf Biegungen auf, wobei die Biegungen einen maximalen Biegewinkel von 90° aufweisen. Die Unterschiene 2 weist vorliegend vierzehn Biegungen auf, wobei die Biegungen einen maximalen Biegewinkel von 90° aufweisen. Weiter hat sich ein Durchmesser der Wälzkörper 8a, 8b im Bereich von 4 mm bis 6 mm, insbesondere von genau 5 mm, als vorteilhaft herausgestellt. Die Biegungen der Unterschiene 2 im Bereich der Wälzkörperlaufbahnen 10a, 10b sind an die Durchmesser der zum Einsatz gelangenden Wälzkörper 8a, 8b angepasst.

Eine Höhe der Oberschiene 4, insbesondere eine Höhe der Schenkel 42, kann variieren. Die Wälzkörper 8a, 8b, welche vorliegend als Kugeln ausgestaltet sind, können gemäß einer nicht dargestellten Ausführungsform durch Gleitelemente, insbesondere aus Kunststoff, ersetzt sein.

In Fig. 2 ist gezeigt, dass die Auflagefläche 46 tangential zu einer gedachten Kreisbahn K um einen Mittelpunkt M einer äußeren Biegung des U-förmigen Profils der Oberschiene 4 orientiert ist. Die Auflagefläche 46 kann in einem Winkel α im Bereich von 15° bis 25° zur Basis 20 der Unterschiene 2 angestellt sein. Vorliegend ist die Auflagefläche 46 in einem Winkel α von 20° zur Basis 20 der Unterschiene 2 angestellt. Der Mittelpunkt M ist der Mittelpunkt des Biegeradius zwischen dem Grundprofil 40 und dem jeweiligen Schenkel 42.

Dieser relativ flache Winkel α bewirkt eine verbesserte Stabilität des Sitzschienenpaars 1 parallel zur Vertikalrichtung z. Ferner ist vermieden, dass verschiedene Auffederungen der Oberschiene 4 und der Unterschiene 2, beispielsweise aufgrund von Fertigungstoleranzen, zu einer Änderung der Abmessungen in Vertikalrichtung z führen. Die oberen Wälzkörperlaufbahnen 10b der Oberschiene 4 weisen eine Anlagefläche zu den oberen Wälzkörpern 8b auf, welche in einem Winkel von ca. 25° bezüglich der Horizontalen angestellt ist.

Darüber hinaus kontaktieren die beiden Auflageflächen 46 die jeweiligen Wälzkörper 8a in einem einer Symmetrieachse S des Sitzschienenpaars 1 näheren Hälfte der Auflageflächen 46 und sind nach außen hin verlängert ausgestaltet. Hierdurch kann sichergestellt werden, dass die Oberschiene 4 auch im Falle einer Torsion um eine Längsachse des Sitzschienenpaars 1 nicht von den Wälzkörpern 8a in den unteren Wälzkörperlaufbahnen 10a abrutschen.

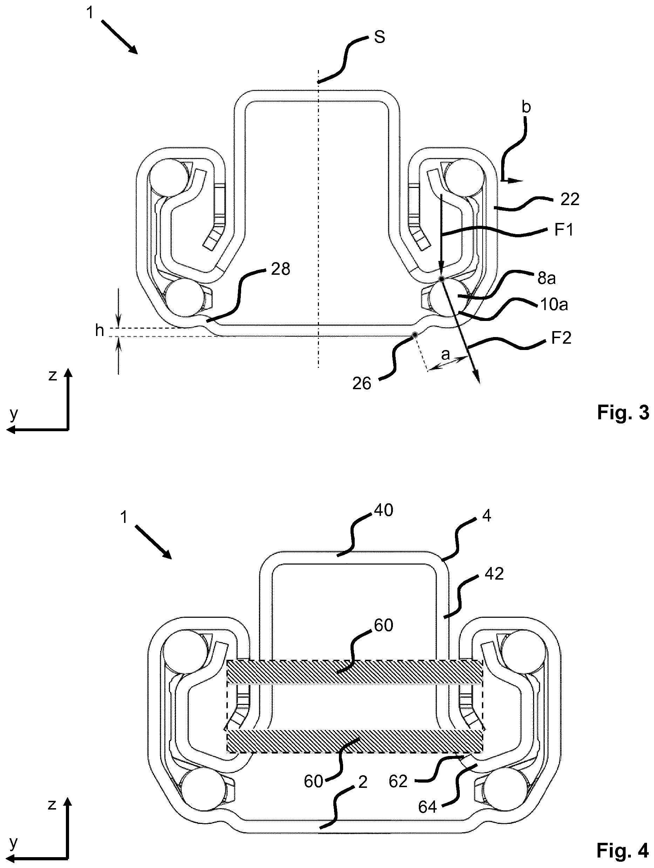

In Fig. 3 ist gezeigt, dass die äußeren Profilabschnitte 22 im Bereich der unteren Wälzkörperlaufbahnen 10a relativ zur Basis 20 der Unterschiene 2 unter Bildung einer Stufe 28 in Vertikalrichtung z erhöht angeordnet sind. Die untere Wälzkörperlaufbahn 10a ist um einen vorbestimmten Betrag in Vertikalrichtung z angehoben, um im Falle einer Durchbiegung der Schiene um die Querrichtung y die Spannung unterhalb der Wälzkörper 8a zu minimieren. Hierdurch ist ein Einreißen der Unterschiene 2 bei entsprechenden Kräften vermeidbar.

Wie weiter gezeigt ist, weist das Sitzschienenpaar 1 eine geringe Verformung bei Vertikallasten in Richtung der Kraft F1 auf. Eine hohe Sitzbelastung in Richtung der Kraft F1, beispielsweise während eines Crash-Falls, führt durch die gewählten erhöhten Positionen der unteren Wälzkörperlaufbahnen 10a zu einer Absenkung der Wälzkörperlaufbahnen 10a. Durch den geringen Abstand a zu einem maximal äußeren Auflagepunkt 26 der Unterschiene 2 auf einer Fahrzeugstruktur ist das resultierende Moment um diesen Auflagepunkt 26 vergleichsweise klein. Eine Auffederung der nach oben gebogenen, äußeren Profilabschnitte 22 der Unterschiene 2 über eine Distanz b in Querrichtung y nach außen fällt entsprechend gering aus. Hierdurch ist eine erhöhte Gesamtstabilität des Sitzschienenpaars 1 erzielt.

In Fig. 4 ist gezeigt, dass eine an sich bekannte Schienenlängsverriegelung, vorliegend eine vertikal zwischen einer Verriegelungsposition und einer Entriegelungsposition verschiebbare Verriegelungsplatte 60, vorgesehen sein kann. Die Verriegelungsplatte 60 ist vorliegend in einer Führungsöffnung der Oberschiene 4, insbesondere in den Schenkeln 42 der Oberschiene 4 geführt. Eine die Bewegung der Verriegelungsplatte 60 nach unten begrenzende Schnittkante 62 ist oberhalb, insbesondere außerhalb, eines Biegeradius 64 im Bereich des Übergangs des Schenkels 42 in den nach oben gebogenen, äußeren Endabschnitt 44 angeordnet. Hierdurch kann eine Rissbildung beim Durchbiegen der Profile um die Querrichtung y der Oberschiene 4 und Unterschiene 2 vermieden werden.

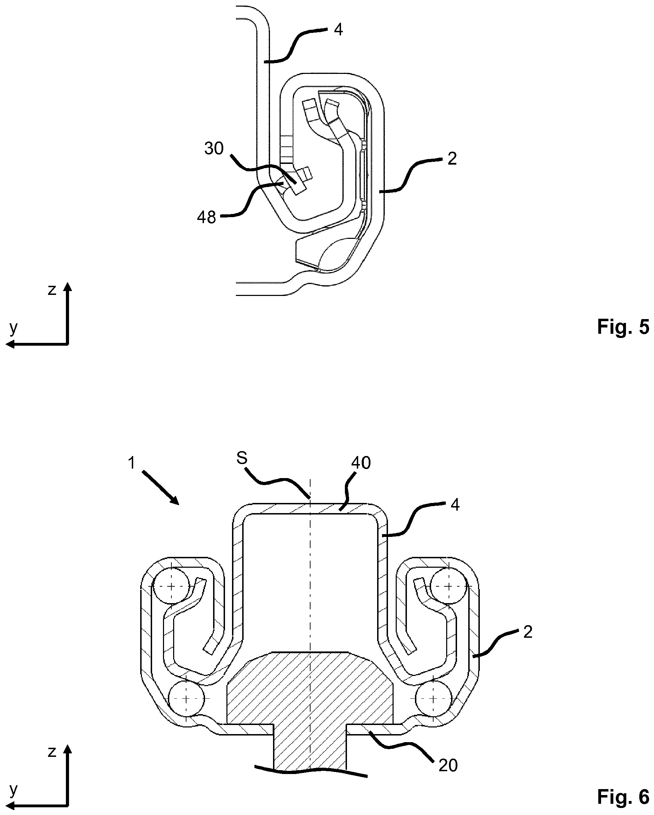

In Fig. 5 ist gezeigt, dass die Verschiebbarkeit der Oberschiene 4 relativ zur Unterschiene 2 mittels eines Zusammenwirkens eines in Verlängerung der nach unten gebogenen Abschnitte 24 der Unterschiene 2 ausgebildeten Endanschlags 30 mit einem in einem Übergangsbereich zwischen dem U-förmigen Profil 40, 42 und dem jeweiligen nach oben gebogenen Endabschnitt 44 angeordneten Anschlagelement 48 begrenzbar ist. Der Endanschlag 30 ist vorliegend aus der Oberscheine 4 ausgestellt, insbesondere nach außen und unten umgebogen.

In Fig. 6 ist gezeigt, dass der dargestellte Querschnitt des erfindungsgemäßen Sitzschienenpaars 1 einen von der Oberschiene 4 und der Unterschiene 2 gebildeten Hohlraum bereitstellt, welcher zur Aufnahme weitere Mechanismen, beispielsweise einer Easy-Entry-Memory-Vorrichtung, oder eines stabileren Fixierelements zur Anbindung an eine Fahrzeugstruktur, beispielsweise eine schraffiert angedeutete Bodenanbindungsschraube, einsetzbar ist. Der Hohlraum ist innerhalb der gewählten äußeren Begrenzung maximal groß.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Sitzschienenpaar
- 2: Unterschiene
- 4: Oberschiene
- 8a, 8b: Wälzkörper
- 10a, 10b: Wälzkörperlaufbahn
- 12: Wälzkörperkäfig
- 14a, 14b: Halteabschnitt
- 20: Basis
- 22: Profilabschnitt
- 24: Abschnitt
- 26: Schienenauflagepunkt
- 28: Stufe
- 30: Endanschlag
- 40: Grundprofil
- 42: Schenkel
- 44: Endabschnitt
- 46: Auflagefläche
- 48: Anschlagelement
- 60: Verriegelungsplatte
- 62: Schnittkante
- 64: Biegeradius
- S: Symmetrieachse
- M: Mittelpunkt
- K: Kreisbahn
- F1: Kraft
- F2: Kraft
- a: Abstand
- b: Distanz
- h: Höhe
- α: Winkel
- y: Querrichtung
- z: Vertikalrichtung

## Patentansprüche

1. Sitzschienenpaar (1) für einen Fahrzeugsitz, insbesondere für einen Kraftfahrzeugsitz, mit einer Unterschiene (2), einer relativ zur Unterschiene (2) in Längsrichtung verschiebbar geführten Oberschiene (4), welche sich mit ihren Profilen gegenseitig hintergreifen, wobei die Unterschiene (2) ein im Wesentlichen C-förmiges Profil (20, 22) mit an den Enden nach unten gebogenen Abschnitten (24) aufweist, wobei die Oberschiene (4) ein im Wesentlichen U-förmiges Profil (40, 42) mit nach oben gebogenen Endabschnitten (44) aufweist, wobei Wälzkörper (8a, 8b) in zwei unteren Wälzkörperlaufbahnen (10a) und zwei oberen Wälzkörperlaufbahnen (10b) zwischen der Unterschiene (2) und der Oberschiene (4) angeordnet sind, wobei ein die in den unteren Wälzkörperlaufbahnen (10a) angeordneten Wälzkörper (8a) kontaktierender Teil der Endabschnitte (44) eine ebene Auflagefläche (46) aufweist,
**dadurch gekennzeichnet, dass**
die Auflagefläche (46) tangential zu einer gedachten Kreisbahn (K) um einen Mittelpunkt (M) einer äußeren Biegung des U-förmigen Profils (40, 42) der Oberschiene (4) orientiert ist.

2. Sitzschienenpaar (1) gemäß Anspruch 1, wobei die Unterschiene (2) eine im Wesentlichen ebene Basis (20) aufweist, an welcher in Querrichtung (y) betrachtet beiderseits nach oben gebogene, äußere Profilabschnitte (22) angrenzen, wobei die nach oben gebogenen Profilabschnitte (22) an ihren der Basis (20) gegenüberliegenden Enden in die nach unten gebogenen Abschnitte (24) übergehen.

3. Sitzschienenpaar (1) gemäß Anspruch 2, wobei die nach oben gebogenen Endabschnitte (44) der Oberschiene (4) in den äußeren Profilabschnitten (22) der Unterschiene (2) geführt sind.

4. Sitzschienenpaar (1) gemäß einem der Ansprüche 2 oder 3, wobei die Wälzkörperlaufbahnen (10a, 10b) in den äußeren Profilabschnitten (22) angeordnet sind.

5. Sitzschienenpaar (1) gemäß einem der Ansprüche 2 bis 4, wobei die äußeren Profilabschnitte (22) im Bereich der unteren Wälzkörperlaufbahnen (10a) relativ zur Basis (20) unter Bildung einer Stufe (28) in Vertikalrichtung (z) erhöht angeordnet sind.

6. Sitzschienenpaar (1) gemäß einem der Ansprüche 1 bis 5, wobei die jeweilige Auflagefläche (46) den jeweiligen Wälzkörper (8a) in einer einer Symmetrieachse (S) des Sitzschienenpaars (1) näheren Hälfte kontaktiert und nach außen hin verlängert ausgestaltet ist.

7. Sitzschienenpaar (1) gemäß einem der Ansprüche 1 bis 6, wobei die Auflagefläche (46) in einem Winkel (α) im Bereich von 15° bis 25°, insbesondere in einem Winkel (α) von 20°, zur Basis (20) der Unterschiene (2) angestellt ist.

8. Sitzschienenpaar (1) gemäß einem der Ansprüche 1 bis 7, wobei die Verschiebbarkeit der Oberschiene (4) relativ zur Unterschiene (2) mittels eines Zusammenwirkens eines in Verlängerung der nach unten gebogenen Abschnitte (24) der Unterschiene (2) angeordneten Endanschlags (30) mit einem in einem Übergangsbereich zwischen dem U-förmigen Profil (40, 42) und dem jeweiligen nach oben gebogenen Endabschnitt (44) angeordneten Anschlagelement (48) begrenzt ist.

9. Sitzschienenpaar (1) gemäß einem der Ansprüche 1 bis 8, wobei die Wälzkörper (8a, 8b) in einem oberen Halteabschnitt (14a) oder einem unteren Halteabschnitt (14b) eines gemeinsamen Wälzkörperkäfigs (12) gehalten sind.

## Claims

1. Seat rail pair (1) for a vehicle seat, in particular for a motor vehicle seat, having a lower rail (2), an upper rail (4) which is displaceably guided relative to the lower rail (2) in the longitudinal direction, which rails engage behind one another with the profiles thereof, wherein the lower rail (2) has a substantially C-shaped profile (20, 22) with portions (24) which are bent downwards at the ends, wherein the upper rail (4) has a substantially U-shaped profile (40, 42) with end portions (44) which are bent upwards, wherein rolling bodies (8a, 8b) are arranged in two lower rolling-body raceways (10a) and two upper rolling-body raceways (10b) between the lower rail (2) and the upper rail (4), wherein a part of the end portions (44) that makes contact with the rolling bodies (8a) arranged in the lower rolling-body raceways (10a) has a planar support face (46),
**characterized in that**
the support face (46) is oriented tangentially with respect to an imaginary circular path (K) about a centre point (M) of an external bend of the U-shaped profile (40, 42) of the upper rail (4).

2. Seat rail pair (1) according to Claim 1, wherein the lower rail (2) has a substantially planar base (20) which, when viewed in the transverse direction (y), is adjoined at both sides by upwardly bent external profile portions (22), wherein the upwardly bent profile portions (22) merge at the ends thereof that are opposite the base (20) into the downwardly bent portions (24).

3. Seat rail pair (1) according to Claim 2, wherein the upwardly bent end portions (44) of the upper rail (4) are guided in the external profile portions (22) of the lower rail (2).

4. Seat rail pair (1) according to either of Claims 2 and 3, wherein the rolling-body raceways (10a, 10b) are arranged in the external profile portions (22).

5. Seat rail pair (1) according to one of Claims 2 to 4, wherein the external profile portions (22) are arranged so as to be raised in the region of the lower rolling-body raceways (10a) relative to the base (20) with a step (28) being formed in the vertical direction (z).

6. Seat rail pair (1) according to one of Claims 1 to 5, wherein the respective support face (46) makes contact with the respective rolling body (8a) in a half that is closer to an axis of symmetry (S) of the seat rail pair (1) and is configured as outwardly extended.

7. Seat rail pair (1) according to one of Claims 1 to 6, wherein the support face (46) is at an angle (α) in the range of from 15° to 25°, in particular at an angle (α) of 20°, with respect to the base (20) of the lower rail (2).

8. Seat rail pair (1) according to one of Claims 1 to 7, wherein the displaceability of the upper rail (4) relative to the lower rail (2) is delimited by means of an interaction of an end stop (30), which is arranged in extension of the downwardly bent portions (24) of the lower rail (2), with a stop element (48), which is arranged in a transition region between the U-shaped profile (40, 42) and the respective upwardly bent end portion (44).

9. Seat rail pair (1) according to one of Claims 1 to 8, wherein the rolling bodies (8a, 8b) are retained in an upper retaining portion (14a) or a lower retaining portion (14b) of a common rolling-body cage (12) .

## Revendications

1. Paire de rails de siège (1) pour un siège de véhicule, en particulier pour un siège de véhicule automobile, comprenant un rail inférieur (2), un rail supérieur (4) guidé de manière déplaçable dans la direction longitudinale par rapport au rail inférieur (2), lesquels viennent en prise l'un avec l'autre mutuellement par l'arrière avec leurs profilés, le rail inférieur (2) présentant un profilé essentiellement en forme de C (20, 22) avec des portions (24) cintrées vers le bas au niveau des extrémités, le rail supérieur (4) présentant un profilé essentiellement en forme de U (40, 42) avec des portions d'extrémité (44) cintrées vers le haut, des corps de roulement (8a, 8b) étant disposés dans deux chemins de roulement inférieurs de corps de roulement (10a) et deux chemins de roulement supérieurs de corps de roulement (10b) entre le rail inférieur (2) et le rail supérieur (4), une partie des portions d'extrémité (44) venant en contact avec les corps de roulement (8a) disposés dans les chemins de roulement inférieurs de corps de roulement (10a) présentant une surface d'appui plane (46),
**caractérisée en ce que**
la surface d'appui (46) est orientée tangentiellement par rapport à une trajectoire circulaire imaginaire (K) autour d'un centre (M) d'une courbure extérieure du profilé en forme de U (40, 42) du rail supérieur (4).

2. Paire de rails de siège (1) selon la revendication 1, dans laquelle le rail inférieur (2) présente une base essentiellement plane (20) à laquelle des portions profilées extérieures (22) cintrées vers le haut des deux côtés, vu dans la direction transversale (y), sont adjacentes, les portions profilées cintrées vers le haut (22) se prolongeant au niveau de leurs extrémités opposées à la base (20) par les portions cintrées vers le bas (24).

3. Paire de rails de siège (1) selon la revendication 2, dans laquelle les portions d'extrémité cintrées vers le haut (44) du rail supérieur (4) sont guidées dans les portions profilées extérieures (22) du rail inférieur (2).

4. Paire de rails de siège (1) selon l'une quelconque des revendications 2 et 3, dans laquelle les chemins de roulement de corps de roulement (10a, 10b) sont disposés dans les portions profilées extérieures (22).

5. Paire de rails de siège (1) selon l'une quelconque des revendications 2 à 4, dans laquelle les portions profilées extérieures (22) sont disposées de manière rehaussée dans la direction verticale (z) dans la région des chemins de roulement inférieurs de corps de roulement (10a) par rapport à la base (20) en formant un gradin (28).

6. Paire de rails de siège (1) selon l'une quelconque des revendications 1 à 5, dans laquelle la surface d'appui respective (46) vient en contact avec le corps de roulement respectif (8a) dans une moitié plus proche d'un axe de symétrie (S) de la paire de rails de siège (1) et est configurée de manière prolongée vers l'extérieur.

7. Paire de rails de siège (1) selon l'une quelconque des revendications 1 à 6, dans laquelle la surface d'appui (46) est inclinée suivant un angle (α) dans une plage de 15° à 25°, en particulier suivant un angle (α) de 20°, par rapport à la base (20) du rail inférieur (2).

8. Paire de rails de siège (1) selon l'une quelconque des revendications 1 à 7, dans laquelle la mobilité du rail supérieur (4) par rapport au rail inférieur (2) est limitée au moyen d'une coopération d'une butée de fin de course (30) disposée dans le prolongement des portions cintrées vers le bas (24) du rail inférieur (2) avec un élément de butée (48) disposé dans une région de transition entre le profilé en forme de U (40, 42) et la portion d'extrémité respective (44) cintrée vers le haut.

9. Paire de rails de siège (1) selon l'une quelconque des revendications 1 à 8, dans laquelle les corps de roulement (8a, 8b) sont retenus dans une portion de retenue supérieure (14a) ou dans une portion de retenue inférieure (14b) d'une cage de corps de roulement commune (12).
